# DEMANDE DE BREVET EUROPEEN

(11) **EP 2 583 559 A2**
(43) Date de publication de la demande: **24.04.2013**
(21) Numéro de dépôt: 12360073.6
(22) Date de dépôt: 11.10.2012
(51) Int. Cl.: A21C 13/00

(54) **Contenant pour la fermentation de pâtons**

(30) Priorité: 18.10.2011 FR 1159388
(71) Demandeur: Scaritech S.A.S., 90000 Belfort (FR)
(72) Inventeur: Reichert, Gérard, 90300 Vetrigne (FR)
(74) Mandataire: Koelbel, Caroline

(57) **Abrégé**

La présente invention concerne un contenant (1) pour la fermentation de pâtons comportant une pluralité de cavités (3) agencées pour recevoir chacune un pâton, le volume desdites cavités (3) étant agencé pour permettre le gonflement dudit pâton au cours de ladite fermentation. Il est caractérisé en ce qu'il comporte une plaque (2) pourvue desdites cavités (3) et un couvercle (4) agencé pour recouvrir ladite plaque (2), ledit couvercle (4) et/ou ladite plaque (2) comportant des moyens pour dans une première position ménager un espace E entre ledit couvercle (4) et ladite plaque (2), de sorte à autoriser une circulation d'air entre lesdites cavités (3) et le milieu ambiant, et dans une seconde position obturer ladite plaque (2) de sorte à interdire une circulation d'air entre lesdites cavités (3) et le milieu ambiant.

## Description

### Domaine technique :

La présente invention concerne un contenant pour la fermentation de pâtons pourvu d'une pluralité de cavités agencées pour recevoir chacune un pâton, le volume desdites cavités étant agencé pour permettre le gonflement dudit pâton au cours de ladite fermentation.

### Technique antérieure :

A l'heure actuelle, différents types de contenants pour la fermentation de pâtons sont couramment utilisés aussi bien au sein de structures artisanales que dans un environnement industriel. Ils comportent une structure variable, choisie notamment en fonction de l'application visée, ou de la forme des pâtons.

La présente invention concerne plus particulièrement le domaine de la fabrication artisanale de pizzas, au sein de restaurants ou autres collectivités dont l'organisation suppose souvent la préparation anticipée d'une quantité prédéterminée de pâtons destinés à la réalisation des fonds, stockés et utilisés progressivement, en fonction des besoins. Il arrive également que la quantité de pâtons préparée ne suffise pas et qu'il faille en préparer à nouveau générant immanquablement des retards dans le service. Il est couramment d'usage de diviser la pâte en pâtons d'un poids déterminé et de placer les pâtons, façonnés sous forme de boules, côte à côte dans des bacs de levage en plastique d'une dizaine de centimètres de hauteur. Suivant les besoins, les bacs de levage sont stockés en chambre froide, sous une température comprise entre 2°C et 4°C en vue de bloquer la fermentation des pâtons, puis au sein d'une chambre de pousse dans laquelle les pâtons sont soumis à la température ambiante pour permettre leur levée préalablement à leur mise en oeuvre. Il a cependant été observé qu'une telle manière de procéder n'est pas optimale, notamment en raison du fait que les pâtons, en augmentant de volume au cours de leur fermentation, collent les uns aux autres à l'intérieur des bacs en plastique. Ils doivent par conséquent être non seulement séparés les uns des autres à l'aide d'un couteau mais également repesés puis refaçonnés, ce qui représente une perte de temps considérable. D'autre part, il a également été observé que la qualité des pâtons obtenus après fermentation n'est pas toujours satisfaisante, du fait que leur exposition à l'air, aussi bien au sein de la chambre froide qu'au sein de la chambre de pousse conduit à la formation, à leur surface, d'une croûte difficile à éliminer et qui se retrouve dans le fond de pizza sous forme de particules dures et désagréables pour le consommateur.

Dans les processus industriels de fabrication du pain, il est connu de diviser la pâte et de placer les pâtons dans des logements individuels prévus dans des paniers ou chariots transportés au travers des différentes unités de levage, de pré-cuisson, de cuisson et/ou de surgélation. Des exemples sont notamment décrits dans les publications FR 2 448 295 et US 4,560,139.

Néanmoins, ces solutions ne sont pas adaptables au domaine artisanal dans lequel l'artisan doit pouvoir disposer d'un contenant simple, peu encombrant, facile à manipuler et à entreposer aussi bien vide que rempli, hygiénique et facile à nettoyer, durable. De plus, les solutions industrielles évoquées n'évitent pas le croûtage des pâtons.

### Exposé de l'invention:

La présente invention vise à proposer une solution permettant de pallier les problèmes évoqués ci-dessus au moyen d'un contenant simple, économique, hygiénique, durable, permettant le stockage et la fermentation individualisés des pâtons, tout en évitant le croûtage des pâtons exposés à l'air ambiant. Par ailleurs, la présente invention entend également proposer une solution permettant de stocker une quantité importante de pâtons dans un volume réduit pour améliorer les conditions de travail de l'artisan boulanger ou cuisinier et lui permettre une meilleure gestion des besoins dans un temps limité.

Dans ce but, l'invention concerne un contenant du genre indiqué en préambule, **caractérisé en ce qu'il** comporte une plaque pourvue desdites cavités et un couvercle agencé pour recouvrir ladite plaque, ledit couvercle et/ou ladite plaque comportant des moyens pour, dans une première position, ménager un espace entre ledit couvercle et ladite plaque, de sorte à autoriser une circulation d'air entre lesdites cavités et le milieu ambiant, et dans une seconde position, obturer ladite plaque de sorte à interdire une circulation d'air entre lesdites cavités et le milieu ambiant.

Selon une variante de réalisation préférentielle du contenant selon l'invention, dans ladite première position, les moyens dudit couvercle et/ou de ladite plaque sont agencés de manière telle que ledit espace entre ledit couvercle et ladite plaque est au moins égal à 3 mm.

Conformément à l'invention, ledit couvercle comporte de préférence une face recto et une face verso agencées de manière telle que lorsque l'une d'entre elles est disposée vis à vis de ladite plaque, ledit couvercle est placé dans ladite première position, tandis que lorsque l'autre est disposée vis à vis de ladite plaque, ledit couvercle est placé dans ladite deuxième position.

La présente invention se caractérise encore en ce que ladite plaque comporte un rebord périphérique définissant un plan d'obturation situé au-dessus du plan dans lequel sont situées lesdites cavités ménagées dans ladite plaque, et en ce que ledit couvercle comporte une face concave et une face convexe bordées par une lèvre périphérique agencée pour coopérer avec ledit rebord périphérique lorsque ledit couvercle est placé sur ladite plaque.

Dans ce cas, selon une caractéristique additionnelle, ladite lèvre périphérique peut comporter, du côté de ladite face concave, une pluralité de protubérances réparties autour dudit couvercle et, du côté de ladite face convexe, une surface lisse, de sorte que lorsque ladite face concave est disposée vis à vis de ladite plaque, lesdites protubérances de ladite lèvre périphérique reposent sur ledit rebord périphérique et ménagent ledit espace entre ledit couvercle et ladite plaque, tandis que lorsque ladite face convexe est disposée vis à vis de ladite plaque, ladite surface lisse de ladite lèvre périphérique épouse ledit rebord périphérique sans jeu.

Conformément à une variante de réalisation, lesdites protubérances peuvent comportent quatre ergots respectivement situés dans chacun des angles dudit couvercle et deux ergots situés dans les longueurs dudit couvercle.

Par ailleurs, ledit rebord périphérique de ladite plaque peut avantageusement être bordé, en partie ou en totalité, par une nervure agencée pour bloquer ledit couvercle au moins dans sa seconde position lorsqu'il obture ladite plaque.

La présente invention se caractérise également en ce que lesdites faces recto et verso dudit couvercle sont agencées pour permettre la superposition de plusieurs plaques associées chacune à un couvercle.

D'autre part, ladite face convexe dudit couvercle peut comporter des moyens d'autocentrage du couvercle par rapport à ladite plaque, tels que par exemple des reliefs disposés dans chacun des angles du couvercle.

Selon une caractéristique additionnelle, ledit rebord périphérique de ladite plaque et ladite lèvre périphérique dudit couvercle sont de préférence agencés pour former un rail destiné à coopérer avec un contre-rail prévu dans un chariot de stockage dans lequel plusieurs contenants peuvent être empilés à la manière de tiroirs.

Le contenant selon l'invention se caractérise en outre en ce qu'il est fabriqué en un matériau composite moulé ou injecté, de préférence choisi parmi du polypropylène renforcé par des fibres de verre et/ou des fibres de carbone. Ledit matériau composite peut en outre comporter une teinte de finition.

Conformément à une forme de réalisation du contenant selon l'invention, lesdites cavités présentent une forme hémisphérique, dont le diamètre est de préférence choisi entre 9 cm et 13 cm.

Selon une forme de réalisation additionnelle, lesdites cavités peuvent par ailleurs présenter une forme semi-cylindrique.

### Description sommaire des dessins :

La présente invention et ses avantages apparaîtront mieux dans la description suivante d'un mode de réalisation donné à titre d'exemple non limitatif, en référence aux dessins annexés, dans lesquels :
- la figure 1 représente une vue en perspective coupée d'une variante de réalisation de la plaque que comporte le contenant selon l'invention,
- les figures 2A et 2B représentent des vues en perspective respectivement de la face recto et de la face verso d'une variante de réalisation du couvercle que comporte le contenant selon l'invention,
- la figure 3 représente une vue en perspective du contenant selon l'invention illustrant l'assemblage sans jeu entre le couvercle de la figure 2B et la plaque de la figure 1, et
- la figure 4 représente une vue en perspective coupée de plusieurs contenants selon l'invention empilés montrant l'espace ménagé entre le couvercle de la figure 2A et la plaque de la figure 1.

### Illustration de l'invention et meilleure manière de la réaliser :

Dans la variante de réalisation illustrée, le contenant 1 selon l'invention comporte une plaque 2 pourvue d'une pluralité de cavités 3 identiques, de forme hémisphérique. De telles cavités 3 sont agencées pour recevoir chacune un pâton en forme de boule (non illustré), du type notamment destiné à la fabrication d'un petit pain rond ou d'un fond de pizza et supposé subir une fermentation au cours de laquelle son volume augmente à l'intérieur de ladite cavité 3, ladite fermentation étant, le cas échéant, précédée par une phase de stockage des pâtons en chambre froide. Avantageusement, le diamètre des cavités 3 est de préférence choisi entre 9 cm et 13 cm pour convenir à un pâton de dimension classique pesant par exemple 250g. Bien entendu, les cavités 3 peuvent présenter une forme différente, adaptée à celle du produit destiné à être fabriqué à partir des pâtons. Ainsi, elles pourraient également présenter une forme semi-cylindrique convenant notamment à la fabrication de baguettes, brioches ou autres produits de forme allongée. D'autre part, le contenant 1 pourrait également comporter une pluralité de cavités dont les formes sont différentes les unes des autres.

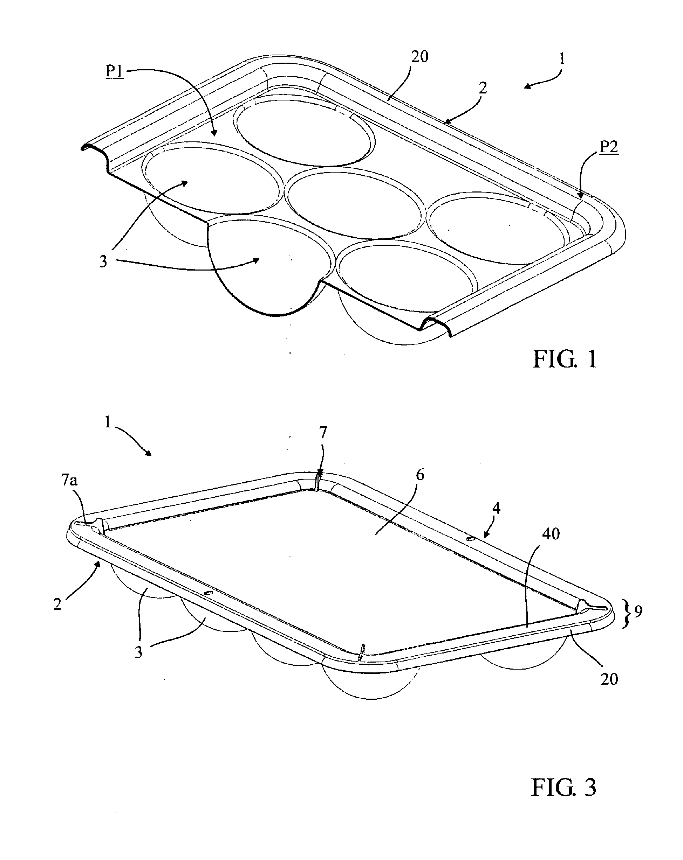

Du fait de la présence des cavités 3, une telle plaque 2 permet par conséquent d'individualiser les différents pâtons placés dans le contenant 1, et d'éviter tout contact entre eux afin qu'ils ne collent pas les uns aux autres en augmentant de volume au cours de leur levée. Dans la variante de réalisation illustrée, la plaque 2 comporte par ailleurs un rebord périphérique 20 définissant un plan d'obturation P2 situé au-dessus du plan P1 dans lequel sont situées les cavités 3 ménagées dans ladite plaque 2 (cf. fig. 1).

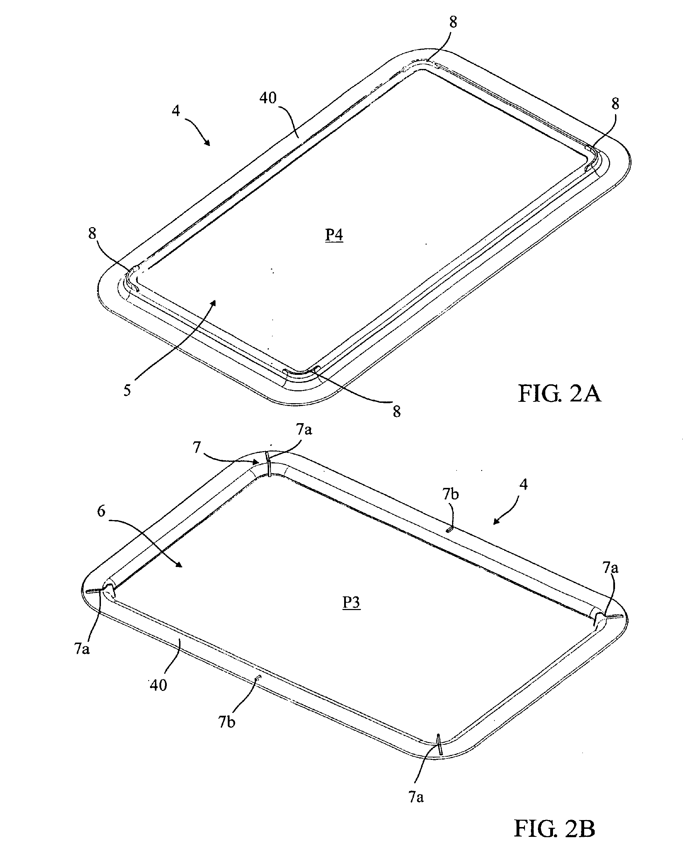

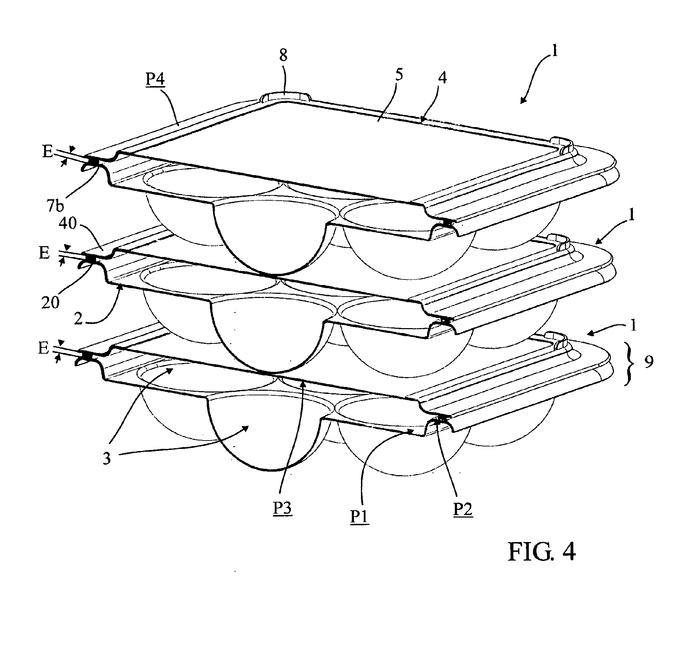

Tel qu'illustré aux figures 3 et 4, le contenant 1 comporte également un couvercle 4 apte à recouvrir la plaque 2 et comportant une face recto convexe 5 (cf. fig. 2A) définissant un plan P4 et une face verso concave 6 (cf. fig. 2B) définissant un plan P3, ces deux faces étant bordées par une lèvre périphérique 40. Cette dernière est agencée pour coopérer avec le rebord périphérique 20 de la plaque 2 lorsque le couvercle 4 est placé sur ladite plaque 2 aussi bien dans la position dans laquelle sa face recto convexe 5 est orientée vis à vis de la plaque 2 que dans la position dans laquelle sa face verso concave 6 est orientée vis à vis de la plaque 2.

Dans la variante de réalisation illustrée, la lèvre périphérique 40 comporte, du côté de la face verso concave 6, une pluralité de protubérances 7 (cf. fig. 2B) réparties autour du couvercle 4 et, du côté de la face recto convexe 5, une surface lisse (cf. fig. 2A). Une telle structure permet avantageusement d'obtenir un contenant 1 dont le couvercle 4 peut être placé dans une première position dans laquelle (cf. fig. 4), la face verso concave 6 du couvercle 4 étant disposée vis à vis de la plaque 2, les protubérances 7 de la lèvre périphérique 40 reposent sur le rebord périphérique 20 en ménageant un espace E entre la plaque 2 et le couvercle 4. La présence de l'espace E autorise une circulation d'air et de gaz de fermentation entre les cavités 3 et le milieu ambiant, ce qui permet avantageusement de provoquer, voire d'accélérer la levée des pâtons disposés dans le contenant 1. Dans cette position, le plan P3 du couvercle 4 est distant du plan P1 des cavités 3 ménageant un volume suffisant entre la plaque 2 et le couvercle 4 pour autoriser l'augmentation de volume des pâtons. Afin que la circulation d'air s'opère dans des conditions optimales, l'invention prévoit par ailleurs de concevoir les protubérances 7 de manière telle que l'espace E est de préférence au moins égal à 3 mm. Bien entendu, toute autre dimension de l'espace E est possible en fonction de la nature des pâtons. Dans l'exemple illustré, les protubérances 7 comportent quatre ergots 7a situés dans les angles et deux ergots 7b situés dans les longueurs du couvercle 4. Néanmoins, toute autre forme de réalisation donnant le même résultat est envisageable.

Une deuxième position du couvercle 4 est obtenue en orientant la face recto convexe 5 vers la plaque 2 (cf. fig. 3). La surface lisse de la lèvre périphérique 40 épouse alors étroitement le rebord périphérique 20 et le plan P4 est proche du plan P1, ce qui permet d'obturer la plaque 2 et d'interdire toute circulation d'air entre les cavités 3 et le milieu ambiant. Une telle étanchéité entre le couvercle 4 et la plaque 2 évite avantageusement le croûtage des pâtons disposés dans le contenant 1 et garantit une durée de conservation plus longue, notamment durant la phase de stockage en chambre froide. Dans l'exemple illustré, la face recto convexe 5 est complétée des moyens d'auto-centrage du couvercle 4 par rapport à la plaque 2 qui se présentent sous la forme de reliefs 8 disposés dans les angles du couvercle 4 (cf. fig. 2A) et qui permettent de faciliter le positionnement et d'assurer le maintien du couvercle 4 sur la plaque 2.

Selon une caractéristique additionnelle du contenant 1 selon l'invention qui n'est pas illustrée, le rebord périphérique 20 de la plaque 2 peut être bordé par une nervure agencée pour bloquer le couvercle 4 dans sa seconde position lorsqu'il obture la plaque 2. Cette nervure peut être continue, et s'étendre autour de l'ensemble du rebord périphérique 20, ou discontinue et comporter une pluralité d'éléments répartis autour du rebord périphérique 20. Dans ce cas, les reliefs 8 ne sont plus nécessaires.

D'autre part, afin de permettre le stockage d'un grand nombre de pâtons dans un minimum d'espace, l'invention prévoit que les faces recto convexe 5 et verso concave 6 du couvercle 4 sont agencées pour permettre la superposition de plusieurs plaques 2 associées chacune à un couvercle 4, conformément à la figure 4.

En outre, le rebord périphérique 20 de la plaque 2 et la lèvre périphérique 40 du couvercle 4 sont agencés pour former ensemble un rail 9 destiné à coopérer avec un contre-rail prévu dans un chariot de stockage (non illustré) dans lequel plusieurs contenants 1 peuvent être empilés à la manière de tiroirs dans l'une et l'autre position du couvercle 4 sur la plaque 2. Ceci permet d'optimiser la manipulation des contenants 1 et de gagner un temps considérable notamment lors de leur déplacement entre les différentes zones de stockage, de fermentation et de transformation.

Le contenant 1 selon l'invention est par ailleurs fabriqué en un matériau composite moulé ou injecté adapté à un usage alimentaire et résistant à des températures comprises entre -40°C et +70°C de sorte à permettre un éventuel séjour aussi bien au congélateur qu'au lave-vaisselle. Un tel matériau sera de préférence choisi parmi du polypropylène renforcé par des fibres de verre et/ou des fibres de carbone, ou similaire, présentant l'avantage d'être incassable, et indéformable. De plus, un tel matériau est non poreux et facile à nettoyer afin de permettre une hygiène irréprochable. Par ailleurs, selon une variante de réalisation préférentielle, le matériau composite comporte une teinte de finition, permettant de proposer des contenants 1 de différentes couleurs. Ces dernières peuvent par exemple être attribuées chacune à une même série de pâtons, de sorte que ladite série, correspondant par exemple à une pluralité de pâtons fabriqués un même jour, soit repérée d'un seul coup d'oeil par un utilisateur.

### Possibilités d'application industrielle :

Il ressort clairement de cette description que l'invention permet d'atteindre les buts fixés. En effet, le contenant 1 selon l'invention est de structure simple, hygiénique et solide. En outre, grâce aux deux positions possibles du couvercle 4 par rapport à la plaque 2, le contenant 1 permet à la fois le stockage et la fermentation des pâtons en évitant leur croûtage dû à une exposition à l'air ambiant, puis une accélération de la fermentation par exposition des pâtons à l'air ambiant. D'autre part, le contenant 1 permet d'éviter que les pâtons ne collent les uns aux autres après leur levée. Par ailleurs, du fait que la présente invention prévoit la possibilité d'empiler plusieurs contenants 1, et éventuellement de les placer sur un chariot de stockage, il est possible de stocker une quantité importante de pâtons dans un volume réduit et de la manipuler dans un temps minimum. Ceci permet d'améliorer les conditions de travail de l'artisan boulanger ou cuisinier et lui permettre une meilleure gestion des besoins avec un coût de main d'oeuvre réduit.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Contenant (1) pour la fermentation de pâtons comportant une pluralité de cavités (3) agencées pour recevoir chacune un pâton, le volume desdites cavités (3) étant agencé pour permettre le gonflement dudit pâton au cours de ladite fermentation, **caractérisé en ce qu'il** comporte une plaque (2) pourvue desdites cavités (3) et un couvercle (4) agencé pour recouvrir ladite plaque (2), ledit couvercle (4) et/ou ladite plaque (2) comportant des moyens pour, dans une première position, ménager un espace E entre ledit couvercle (4) et ladite plaque (2), de sorte à autoriser une circulation d'air entre lesdites cavités (3) et le milieu ambiant, et dans une seconde position, obturer ladite plaque (2) de sorte à interdire une circulation d'air entre lesdites cavités (3) et le milieu ambiant.

2. Contenant (1) selon la revendication 1, **caractérisé en ce que**, dans ladite première position, les moyens dudit couvercle (4) et/ou de ladite plaque (2) sont agencés de manière telle que ledit espace E entre ledit couvercle (4) et ladite plaque (2) est au moins égal à 3 mm.

3. Contenant (1) selon l'une quelconque des revendications 1 ou 2, **caractérisé en ce que** ledit couvercle (4) comporte une face recto (5) et une face verso (6) agencées de manière telle que lorsque l'une d'entre elles est disposée vis à vis de ladite plaque (2), ledit couvercle (4) est placé dans ladite première position, tandis que lorsque l'autre est disposée vis à vis de ladite plaque (2), ledit couvercle (4) est placé dans ladite deuxième position.

4. Contenant (1) selon la revendication 3, **caractérisé en ce que** ladite plaque (2) comporte un rebord périphérique (20) définissant un plan d'obturation P2 situé au-dessus du plan P1 dans lequel sont situées lesdites cavités (3) ménagées dans ladite plaque (2), et **en ce que** ledit couvercle (4) comporte une face concave (6) et une face convexe (5) bordées par une lèvre périphérique (40) agencée pour coopérer avec ledit rebord périphérique (20) lorsque ledit couvercle (4) est placé sur ladite plaque (2).

5. Contenant (1) selon la revendication 4, **caractérisé en ce que** ladite lèvre périphérique (40) comporte, du côté de ladite face concave (6), une pluralité de protubérances (7) réparties autour dudit couvercle (4) et, du côté de ladite face convexe (5), une surface lisse, de sorte que lorsque ladite face concave (6) est disposée vis à vis de ladite plaque (2), lesdites protubérances (7) de ladite lèvre périphérique (40) reposent sur ledit rebord périphérique (20) et ménagent ledit espace E entre ledit couvercle (4) et ladite plaque (2), tandis que lorsque ladite face convexe (5) est disposée vis à vis de ladite plaque (2), ladite surface lisse de ladite lèvre périphérique (40) épouse ledit rebord périphérique (20) sans jeu.

6. Contenant (1) selon la revendication 5, **caractérisé en ce que** lesdites protubérances (7) comportent des ergots (7a) respectivement situés dans chacun des angles dudit couvercle (4) et des ergots (7b) situés dans les longueurs dudit couvercle (4).

7. Contenant (1) selon la revendication 5, **caractérisé en ce que** ledit rebord périphérique (20) de ladite plaque (2) est en partie ou en totalité bordé par une nervure agencée pour bloquer ledit couvercle (4) au moins dans sa seconde position lorsqu'il obture ladite plaque (2).

8. Contenant (1) selon l'une quelconque des revendications précédentes, **caractérisé en ce que** lesdites faces recto (5) et verso (6) dudit couvercle (4) sont agencées pour permettre la superposition de plusieurs plaques (2) associées chacune à un couvercle (4).

9. Contenant (1) selon la revendication 5, **caractérisé en ce que** ledit rebord périphérique (20) de ladite plaque (2) et ladite lèvre périphérique (40) dudit couvercle (4) sont agencés pour former un rail (9) destiné à coopérer avec un contre-rail prévu dans un chariot de stockage dans lequel plusieurs contenants (1) peuvent être empilés à la manière de tiroirs.

10. Contenant (1) selon la revendication 5, **caractérisé en ce que** ladite face convexe (5) dudit couvercle (4) comporte des moyens d'auto-centrage (8) du couvercle par rapport à ladite plaque (2).

11. Contenant (1) selon la revendication 10, **caractérisé en ce que** lesdits moyens d'auto-centrage comportent des reliefs (8) disposés dans chacun des angles du couvercle (4).

12. Contenant (1) selon l'une quelconque des revendications précédentes, **caractérisé en ce qu'il** est fabriqué en un matériau composite moulé ou injecté choisi parmi du polypropylène renforcé par des fibres de verre et/ou des fibres de carbone.

13. Contenant (1) selon l'une quelconque des revendications précédentes, **caractérisé en ce que** lesdites cavités (3) présentent une forme hémisphérique.

14. Contenant (1) selon la revendication 13, **caractérisé en ce que** le diamètre desdites cavités (3) est choisi entre 9 cm et 13 cm.

15. Contenant (1) selon l'une quelconque des revendications 1 à 12, **caractérisée en ce que** lesdites cavités (3) présentent une forme semi-cylindrique.
